# EUROPEAN PATENT APPLICATION

(11) **EP 4 387 182 A1**
(43) Date of publication of application: **19.06.2024**
(21) Application number: 23214674.6
(22) Date of filing: 06.12.2023
(51) Int. Cl.: H04L 41/02, H04L 41/0853, H04L 43/04

(54) **COLLECTING AND PREPARING SEARCHABLE NETWORK DATA**

(30) Priority: 15.12.2022 US 202218066691
(71) Applicant: Nokia Solutions and Networks Oy, 02610 Espoo (FI)
(72) Inventor: GUILBEAULT, Frederic, Kanata, K2T1G2 (CA); SEETHARAMAN, Swaminathan, 600044 Chennai (IN)
(74) Representative: Zinsinger, Norbert

(57) **Abstract**

A system for operating a network comprises means to identify a network device instance including at least two datasources; obtain a first dataset from a first datasource of the network device instance; obtain a second dataset from a second datasource of the network device instance; merge the first dataset and the second dataset to create a combined dataset; and store the combined dataset in an indexed repository. The first dataset includes network configuration data associated with a network device and hosted by a Persistent Management Agent and the second dataset includes operational data of the network device.

## Description

### BACKGROUND

Large amounts of data may be distributed across devices within a network and may be accessed through the devices. The devices in the network may store network data that is encoded in Extensible Markup Language (XML).

### SUMMARY

One or more example embodiments enable collection, merging, and storing of network data across one or more devices in a network.

In at least one example embodiment, a system for operating a network is described. The system may include at least one memory storing computer readable instructions. The system may further include at least one processor configured to execute the computer readable instructions to cause the system to identify a network device instance including at least two datasources, obtain a first dataset from a first datasource of the network device instance, obtain a second dataset from a second datasource of the network device instance, merge the first dataset and the second dataset to create a combined dataset, and store the combined dataset in an indexed repository. In some example embodiments, the first dataset may include network configuration data associated with a network device and hosted by a Persistent Management Agent (PMA) and the second dataset may include operational data of the network device.

In some example embodiments, the first datasource may be the PMA and the second datasource may be the network device. The network device may include the operational data for the network device and configuration data for the network device.

In some example embodiments, the combined dataset may be stored as a document in the indexed repository. The document may correspond to the network device instance and the indexed repository may be configured to store a plurality of documents corresponding to a plurality of network device instances.

In some example embodiments, the at least one processor may be further configured to execute the computer readable instructions to cause the system to obtain the first dataset and the second dataset using a network management protocol at the network device instance. In some example embodiments, the network management protocol may be one of NETCONF, SNMP, TR-069, or ZigBee.

In some example embodiments, the at least one processor is further configured to execute the computer readable instructions to cause the system to obtain a third dataset from a third datasource of the network device instance, merge the third dataset into the combined dataset to create an updated dataset, and store the updated dataset in the indexed repository.

In some example embodiments, the at least one processor may be further configured to execute the computer readable instructions to cause the system to obtain an inventory collection model including at least one inventory object specification and a reference to at least one associated device type with a common Yang model, the at least one inventory object specification defining a unique path. In some example embodiments, the at least one inventory object specification may further indicate a datasource.

In some example embodiments, the at least one processor may be further configured to execute the computer readable instructions to cause the system to generate index metadata from the inventory collection model and the common Yang model of the at least one associated device type, create an index in the indexed repository corresponding to the inventory collection model, and store the index metadata in the index in the indexed repository corresponding to the inventory collection model.

In some example embodiments, the at least one processor may be further configured to execute the computer readable instructions to cause the system to obtain the second dataset from the second datasource by defining a query filter based on the unique path and the common Yang model of the at least one device type associated with the inventory collection model and querying the second datasource with the query filter to obtain a filtered dataset from the second datasource to create an XML-encoded draft of the second dataset.

In some example embodiments, the at least one processor may be further configured to execute the computer readable instructions to cause the system to obtain the first dataset from the first datasource by querying the first datasource to obtain data from the first datasource and filtering the data based on the unique path of the inventory collection model and the common Yang model of the at least one device type associated with the inventory collection model to create an XML-encoded draft of the second dataset.

In some example embodiments, a unique path of an inventory object specification of the inventory collection model corresponding to the second dataset may be embedded within a list in a unique path of an inventory object of the inventory collection model corresponding to the first dataset. The at least one processor may be further configured to execute the computer readable instructions to cause the system to merge the first dataset and the second dataset to create the combined dataset via a complex merge. In some example embodiments, the complex merge may include determining at least one effective XPath of the second dataset, generating at least one set of complex Extensible Stylesheet Language Transformations (XSLTs) for the at least one effective XPath of the second dataset, pruning conflicting subtrees from the first dataset using a first XSLT, extracting data subtrees of the second dataset corresponding to the at least one effective XPath of the second dataset with a second XSLT, and merging the data subtrees into the first dataset with a third XSLT.

In some example embodiments, a root node of a unique path of an inventory object specification of the inventory collection model corresponding to the second dataset may be specified in a unique path of an inventory object specification of the inventory collection model corresponding to the first dataset. The at least one processor may be further configured to execute the computer readable instructions to cause the system to merge the first dataset and the second dataset to create the combined dataset via a simple merge. In some example embodiments, the simple merge may include determining at least one effective XPath of the second dataset, generating at least one set of simple Extensible Stylesheet Language Transformations (XSLTs) for the at least one effective XPath of the second dataset, pruning conflicting subtrees from the first dataset using a first XSLT, extracting data subtrees of the second dataset corresponding to the at least one effective XPath of the second dataset with a second XSLT, and merging the data subtrees into the first dataset with a third XSLT.

In some example embodiments, a root node of a unique path of an inventory object specification of the inventory collection model corresponding to the second dataset is not specified in a unique path of an inventory object specification of the inventory collection model corresponding to the first dataset. The at least one processor may be further configured to execute the computer readable instructions to cause the system to merge the first dataset and the second dataset to create the combined dataset via a trivial merge. In some example embodiments, the trivial merge may include determining at least one effective XPath of the second dataset, generating at least one set of trivial Extensible Stylesheet Language Transformations (XSLTs) for the at least one effective XPath of the second dataset, pruning conflicting subtrees from the first dataset using a first XSLT, extracting data subtrees of the second dataset corresponding to the at least one effective XPath of the second dataset with a second XSLT, and merging the data subtrees into the first dataset with a third XSLT.

In some example embodiments, the at least one processor may be further configured to execute the computer readable instructions to cause the system to use a static approach to identify datasources corresponding to each inventory object specification of the inventory collection model and adjust obtaining of the first dataset from the first datasource of the network device instance and obtaining of the second dataset from the second datasource of the network device instance.

In some example embodiments, the at least one processor may be further configured to execute the computer readable instructions to cause the system to use a dynamic approach to identify datasources corresponding to each inventory object specification of the inventory collection model and adjust obtaining of the first dataset from the first datasource of the network device instance and obtaining of the second dataset from the second datasource of the network device instance based on at least one of historical performance of the first datasource, historical performance of the second datasource, and current conditions of the network.

In some example embodiments, the at least one processor may be further configured to execute the computer readable instructions to cause the system to obtain the first dataset from the first datasource and obtain the second dataset from the second datasource concurrently.

In some example embodiments, the at least one processor may be further configured to execute the computer readable instructions to cause the system to prioritize data from the second dataset in response to a discrepancy between the first dataset and the second dataset.

In some example embodiments, the at least one processor may be further configured to execute the computer readable instructions to cause the system to output the combined dataset from the indexed repository via at least one of an application, Operation Support Systems (OSS), Business Support Systems (BSS), order management systems, network monitoring, or troubleshooting.

In some example embodiments, the first datasource and the second datasource may be included in at least one of an access network, an edge network, an end-to-end network, a core network, or an Internet of Things (IoT) network.

In at least one example embodiment, a system for operating a network is described. The system comprises means to identify a network device instance including at least two datasources, obtain a first dataset from a first datasource of the network device instance, the first dataset including network configuration data associated with a network device and hosted by a Persistent Management Agent (PMA), obtain a second dataset from a second datasource of the network device instance, the second dataset including operational data of the network device, merge the first dataset and the second dataset to create a combined dataset, and store the combined dataset in an indexed repository.

In some example embodiments, the first datasource is the Persistent Management Agent (PMA) and the second datasource is the network device and the network device includes the operational data for the network device and configuration data for the network device.

In some example embodiments, the combined dataset is stored as a document in the indexed repository, the document corresponds to the network device instance, and the indexed repository is configured to store a plurality of documents corresponding to a plurality of network device instances.

In some example embodiments, the means cause the system to obtain a third dataset from a third datasource of the network device instance, merge the third dataset into the combined dataset to create an updated dataset, and store the updated dataset in the indexed repository.

In some example embodiments, the means cause the system to obtain an inventory collection model including at least one inventory object specification and a reference to at least one associated device type with a common Yang model, the at least one inventory object specification defining a unique path.

In some example embodiments, the means cause the system to generate index metadata from the inventory collection model and the common Yang model of the at least one associated device type, create an index in the indexed repository corresponding to the inventory collection model and store the index metadata in the index in the indexed repository corresponding to the inventory collection model.

In some example embodiments, the means cause the system to obtain the second dataset from the second datasource by defining a query filter based on the unique path and the common Yang model of the at least one device type associated with the inventory collection model; and querying the second datasource with the query filter to obtain a filtered dataset from the second datasource to create an XML-encoded draft of the second dataset.

In some example embodiments, the means cause the system to obtain the first dataset from the first datasource by querying the first datasource to obtain data from the first datasource; and filtering the data based on the unique path of the inventory collection model and the common Yang model of the at least one device type associated with the inventory collection model to create an XML-encoded draft of the second dataset.

In some example embodiments, a unique path of an inventory object specification of the inventory collection model corresponding to the second dataset is embedded within a list in a unique path of an inventory object of the inventory collection model corresponding to the first dataset, and the means cause the system to merge the first dataset and the second dataset to create the combined dataset via a complex merge.

In some example embodiments, the complex merge comprises determining at least one effective XPath of the second dataset; generating at least one set of complex Extensible Stylesheet Language Transformations (XSLTs) for the at least one effective XPath of the second dataset; pruning conflicting subtree from the first dataset using a first XSLT; extracting data subtrees of the second dataset corresponding to the at least one effective XPath of the second dataset with a second XSLT; and merging the data subtrees into the first dataset with a third XSLT.

In some example embodiments, a root node of a unique path of an inventory object specification of the inventory collection model corresponding to the second dataset is specified in a unique path of an inventory object specification of the inventory collection model corresponding to the first dataset; and the means cause the system to merge the first dataset and the second dataset to create the combined dataset via a simple merge.

In some example embodiments, the simple merge comprises determining at least one effective XPath of the second dataset; generating a set of simple XSLTs for the at least one effective XPath of the second dataset; pruning conflicting subtree from the first dataset using a first XSLT; extracting data subtrees of the second dataset corresponding to the at least one effective XPath of the second dataset using a second XSLT; and merging the data subtrees into the first dataset using a third XSLT.

In some example embodiments, the means cause the system to use a static approach to identify datasources corresponding to each inventory object specification of the inventory collection model; and to adjust obtaining of the first dataset from the first datasource of the network device instance and obtaining of the second dataset from the second datasource of the network device instance.

In some example embodiments, the means cause the system to use a dynamic approach to identify datasources corresponding to each inventory object specification of the inventory collection model; and adjust obtaining of the first dataset from the first datasource of the network device instance and obtaining of the second dataset from the second datasource of the network device instance based on at least one of historical performance of the first datasource, historical performance of the second datasource, and current conditions of the network.

In at least one example embodiment, a method for operating a network is described. The method comprises identifying a network device instance including at least two datasources; obtaining a first dataset from a first datasource of the network device instance, the first dataset including network configuration data associated with a network device and hosted by a Persistent Management Agent (PMA); obtaining a second dataset from a second datasource of the network device instance, the second dataset including operational data of the network device; merging the first dataset and the second dataset to create a combined dataset; and storing the combined dataset in an indexed repository.

Also described herein is an example embodiment of a method for operating a network. In some example embodiments, the method may include identifying a network device instance including at least two datasources, obtaining a first dataset from a first datasource of the network device instance, obtaining a second dataset from a second datasource of the network device instance, merging the first dataset and the second dataset to create a combined dataset, and storing the combined dataset in an indexed repository. In some example embodiments, the first dataset may include network configuration data associated with a network device and hosted by a Persistent Management Agent (PMA) and the second dataset may include operational data of the network device.

Also described herein is an example embodiment of a non-transitory computer readable medium storing computer-executable instructions that, when executed by one or more processors of a system, cause the system to perform a method of operating a network. The method may include identifying a network device instance including at least two datasources, obtaining a first dataset from a first datasource of the network device instance, obtaining a second dataset from a second datasource of the network device instance, merging the first dataset and the second dataset to create a combined dataset, and storing the combined dataset in an indexed repository. In some example embodiments, the first dataset may include network configuration data associated with a network device and hosted by a Persistent Management Agent (PMA) and the second dataset may include operational data of the network device.

### BRIEF DESCRIPTION OF THE DRAWINGS

Example embodiments will become more fully understood from the detailed description given herein below and the accompanying drawings, wherein like elements are represented by like reference numerals, which are given by way of illustration only and thus are not limiting of this disclosure.
FIG. 1 is a functional block diagram of an example of a system for operating a network that includes a network of devices, an inventory collection system, and an indexed inventory data repository.
FIG. 2 is a diagram illustrating example data stored within a network device.
FIG. 3 is a diagram illustrating an example of a complex merge of data of two network devices.
FIG. 4 is a diagram illustrating an example of a simple merge of data of two network devices.
FIG. 5 is a diagram illustrating an example of a trivial merge of data of two network devices.
FIG. 6 is a flow chart illustrating an example method of operating the system of FIG. 1.
FIG. 7 is a flow chart illustrating an example method of obtaining data from a first datasource of a network.
FIG. 8 is a flow chart illustrating an example method of obtaining data from a second datasource of a network.
FIG. 9 is a flow chart illustrating an example method of generating and storing index metadata.
FIG. 10 is a flow chart illustrating an example method of merging data from two datasources of a network.
FIG. 11 is a flow chart illustrating an example method of storing the merged data of FIG. 10.
FIG. 12 provides a general architecture and functionality suitable for implementing functional elements described herein or portions of functional elements described herein.

It should be noted that these figures are intended to illustrate the general characteristics of methods, structure and/or materials utilized in certain example embodiments and to supplement the written description provided below. These drawings are not, however, to scale and may not precisely reflect the precise structural or performance characteristics of any given embodiment, and should not be interpreted as defining or limiting the range of values or properties encompassed by example embodiments. The use of similar or identical reference numbers in the various drawings is intended to indicate the presence of a similar or identical element or feature.

### DETAILED DESCRIPTION

Various example embodiments will now be described more fully with reference to the accompanying drawings in which some example embodiments are shown.

Detailed illustrative embodiments are disclosed herein. However, specific structural and functional details disclosed herein are merely representative for purposes of describing example embodiments. The example embodiments may, however, be embodied in many alternate forms and should not be construed as limited to only the embodiments set forth herein.

Accordingly, while example embodiments are capable of various modifications and alternative forms, the embodiments are shown by way of example in the drawings and will be described herein in detail. It should be understood, however, that there is no intent to limit example embodiments to the particular forms disclosed. On the contrary, example embodiments are to cover all modifications, equivalents, and alternatives falling within the scope of this disclosure. Like numbers refer to like elements throughout the description of the figures.

One or more example embodiments provide a system for operating a network that may include collecting data from one or more datasources of the network, merging data from the one or more datasources, and storing the merged data in an indexed repository.

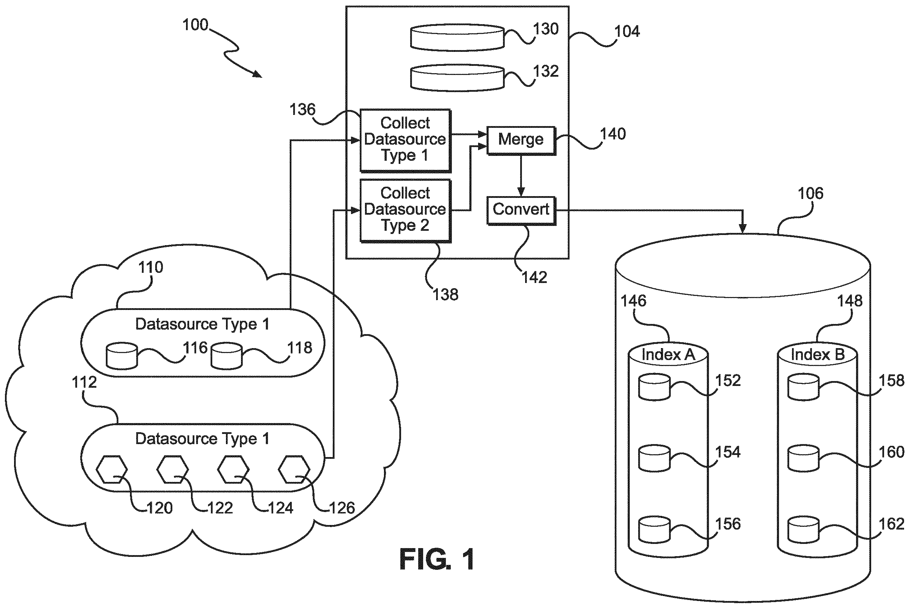

FIG. 1 illustrates an example embodiment of a system 100 for operating a network. In some example embodiments, the system 100 may include a network of devices 102, an inventory collection system 104, and an indexed repository 106.

The network of devices 102 may include a plurality of datasources. In some example embodiments, the network of devices 102 may be represented by a network topology. Each datasource of the network of devices 102 may be a NETCONF datastore that may store network configuration information as encoded extensible markup language (XML) documents and files. In some example embodiments, the datasources may be categorized by type such that there are datasources of a first type, a second type, a third type, etc. For example, as shown in FIG. 1, there may be two types of datasources that may be categorized into an inventory datasource of type 1 110 and an inventory datasource of type 2 112. Within each of the inventory datasource of type 1 110 and the inventory datasource of type 2 112 there may be data for one or more network devices. In some example embodiments, the datasources within the inventory datasource of type 1 110 may be Persistent Management Agents (PMAs). For example, the inventory datasource of type 1 110 may include a fiber PMA 116 and a copper PMA 118. In some example embodiments, the datasources within the inventory datasource of type 2 112 may be network devices. For example, the inventory datasource of type 2 may include a first fiber device 120, a second fiber device 122, a first copper device 124, and a second copper device 126. The fiber PMA 116, the first fiber device 120, and the second fiber device 122 are all associated with fiber-optic communication and may be considered datasources for a first device type. The copper PMA 118, the first copper device 124, and the second copper device 126 are all associated with copper wire communication and may be considered datasources for a second device type.

In some example embodiments, the fiber PMA 116 and the copper PMA 118 may be configured to store configuration data of network devices of the network. More specifically, the fiber PMA 116 may be configured to store configuration data related to the first fiber device 120 and the second fiber device 122 and the copper PMA 118 may be configured to store configuration data related to the first copper device 124 and the second copper device 126. In some example embodiments, the network devices such as the first fiber device 120, the second fiber device 122, the first copper device 124, and the second copper device 126 may be configured to store configuration data and operational data. In other embodiments, the network devices may be configured to store additional network data that may be capable of being collected, merged, and stored within the context of the system 100. In some example embodiments, configuration data may include information about the configuration of network devices within a network while operational data may include data about the status, hardware or software characteristics (serial number, version number, etc.), current performance, past performance, or cumulative performance of network devices within a network. In some example embodiments, operational data may additionally include an operational status of a network device, operational status or serial number of a hardware component of the network, packet counts at a physical port of a network device, software migration status, or histograms of data of the network device.

In some example embodiments, the network devices may be aggregate devices such that each of the network devices may be in communication with and may include configuration data for one or more additional devices. This may enable network devices to aggregate data from next level devices and/or remote devices within the network of devices 102. For example, the network devices may be optical line terminals (OLTs) and the one or more additional devices may be optical network terminals (ONTs).

The structure of the network of devices 102 may determine a strategy for collection of data from the datasources within the network of devices 102. In some example embodiments, certain datasources may have connectivity issues, may have certain privacy or security aspects, may have network limitations based on CPU/RAM/disk within the network of devices, may be unable to report data or may be only able to report data in certain circumstances such as last known data or data within a direct scope of the given datasource, or may have constraints of data collection based on the amount of data stored within the datasource. Based on any of the above-described constraints, the systems and methods described herein may enable data to be collected, filtered, and merged from datasources corresponding to a network device instance in an improved manner.

In some example embodiments, there may be additional or alternative datasources included in the network of devices 102. For example, datasources within the network of devices 102 may include OLTs, ONTs, and PMAs for optical access networks; user equipment (UEs), evolved node Bs (eNodeB or eNBs), home subscriber server (HSS), mobility management entity (MME), signalling gateway (SGW), and packet data network gateways (PGWs) for 4G networks; proxy call session control functions (P-CSCFs), interrogating call session control functions (I-CSCFs), serving call session control functions (S-CSCFs), media gateway control functions (MGCFs), media gateways (MGWs), border gateways (BGWs), and HSSs in an Internet Protocol (IP) multimedia subsystem (IMS) network; UEs, distributed units (DUs), and centralized units (CUs) in a 5G core network; cluster heads in an ad hoc Internet of Things (IoT) sensor/drone network; and cluster heads and gateway nodes in a healthcare I factory I agriculture IoT network. Thus, datasources within the network of devices 102 may be included in at least one of an access network, an edge network, an end-to-end network, a core network, or an Internet of Things (IoT) network.

Still referring to FIG. 1, the inventory collection system 104 may be implemented on a hardware computing platform at, for example, a network management entity or other network element. The hardware computing platform may be built around multiple server boards utilizing processing circuitry (e.g., one or more processors or processing cores). In one example, a network management entity may be a network management server or the like.

The inventory collection system 104 may include one or more inventory collection models. For example, the inventory collection system 104 may include a fiber inventory collection model 130 and a copper inventory collection model 132. Each inventory collection model may specify a device type and one or more unique paths. In some example embodiments, the unique paths may be used to define effective XPaths that may be used to merge data from the first datasource with data from the second datasource. In some example embodiments, the one or more effective XPaths may describe a location of an inventory object, also referred to as an inventory object specification, within a datasource based on a YANG model of the device type associated with the inventory collection model. In the case of NETCONF, network models are typically defined in YANG. NETCONF is defined in RFC 6241. YANG is a data modelling language used to model configuration and state data manipulated by the NETCONF, NETCONF remote procedure calls, and NETCONF notifications. YANG is defined in RFC 6020. Given the tree nature of the YANG models, individual network entities may be leaves and sets thereof may be subtrees.

The fiber inventory collection model 130 may correspond to the fiber PMA 116, the first fiber device 120, and the second fiber device 122. The copper inventory collection model 132 may correspond to the copper PMA 118, the first copper device 124, and the second copper device 126. Once the inventory collection models are defined, data may be collected and filtered from each of the datasources. Data from each of the datasources may be XML data that may be collected and filtered based on the corresponding inventory collection model. For example, data from the fiber PMA 116 and the copper PMA 118 may be collected and/or filtered at block 136 and data from the first fiber device 120, the second fiber device 122, the first copper device 124, and the second copper device 126 may be collected and/or filtered at block 138. The collection and filtering of the data will be described in further detail below.

Once the data from each of the datasources of the network of devices 102 is collected and filtered, the data may be merged at block 140. Data may be merged from datasources of the same device type. For example, data from the fiber PMA 116 may be merged with data from the first fiber device 120 and the second fiber device 122 and data from the copper PMA 118 may be merged with data from the first copper device 124 and the second copper device 126. The merging of data from the various datasources will be described in further detail below. In some example embodiments, the inventory collection system 104 may use extensible Markup Language (XML) Stylesheet Language for Transformations (XSLT) to merge data from the datasources.

Once the data from the datasources is merged, the merged data may be converted at block 142. The data from the various datasources may be collected, filtered, and/or merged as XML data. The merged data may need to be converted to another format to be stored in the indexed repository 106. In one example, the merged data may be converted from XML to JavaScript Object Notation (JSON) at the block 142. After the merged data has been converted (e.g., to JSON), it may be stored in the indexed repository 106.

In one example, the indexed repository 106 may be, or be stored in, memory at a network management entity, other network element, may be distributed across network elements or be stored in the cloud.

The indexed repository 106 may include a first index 146, index A, and a second index 148, index B. The first index 146 may correspond to a first inventory collection model and a first device type and the second index 148 may correspond to a second inventory collection model and a device type. For example, the first index 146 may correspond to the fiber device type and the second index 148 may correspond to the copper device type. Accordingly, the first index 146 may include a first document 152, a second document 154, and first index metadata 156, and the second index 148 may include a first document 158, a second document 160, and second index metadata 162.

In some example embodiments, the first document 152 of the first index 146 may include data for a first network device instance that includes data from the first fiber device 120 and the fiber PMA 116. More specifically, data from the fiber PMA 116 may have been merged with data from the first fiber device 120 and may be stored in the first document 152 of the first index 146. Similarly, the second document 154 of the first index 146 may include data for a second network device instance that includes data from the second fiber device 122 and the fiber PMA 116. More specifically, data from the fiber PMA 116 may have been merged with data from the second fiber device 122 and may be stored in the second document 154 of the first index 146. In other embodiments, the first fiber device 120 and the second fiber device 122 may be part of the same network device instance such that the data from the fiber PMA 116, the first fiber device 120, and the second fiber device 122 may be merged and stored in a (e.g., one) document within the first index 146 of the indexed repository 106.

The first index 146 may additionally include the first index metadata 156. In some example embodiments, the system 100 may generate index metadata corresponding to each inventory collection model when the system 100 reads the inventory collection model. For example, the first index metadata 156 may be generated when the fiber inventory collection model 130 is read by the system 100. Once the first index metadata 156 is generated, it may be stored in the indexed repository 106. More specifically, the first index metadata 156 may be stored in the first index 146. In some example embodiments, the index metadata may be configured to document circumstances of the overall data collection process for all of the datasources corresponding to the given inventory collection model. Additionally, or alternatively, the index metadata may be used to track and diagnose errors during the data collection process across all datasources corresponding to the given inventory collection model. For example, the index metadata may record or document if data collection is interrupted due to an inventory collection system restart or by an action of a user. The index metadata may additionally include a record of a total number of targeted datasources and a record of datasources where data was collected. Further, the index metadata may include a record of a device type, an inventory model name, or the inventory collection model.

In some example embodiments, the first document 158 of the second index 148 may include data for a first network device instance that includes data from the first copper device 124 and the copper PMA 118. More specifically, data from the copper PMA 118 may have been merged with data from the first copper device 124 and may be stored in the first document 158 of the second index 148. Similarly, the second document 160 of the second index 148 may include data for a second network device instance that includes data from the second copper device 126 and the copper PMA 118. More specifically, data from the copper PMA 118 may have been merged with data from the second copper device 126 and may be stored in the second document 160 of the second index 148. In other embodiments, the first copper device 124 and the second copper device 126 may be part of the same network device instance such that the data from the copper PMA 118, the first copper device 124, and the second copper device 126 may be merged and stored in a (e.g., one) document within the second index 148 of the indexed repository 106.

The second index 148 may additionally include the second index metadata 162. In some example embodiments, the system 100 may generate index metadata corresponding to each inventory collection model when the system 100 reads the inventory collection model. For example, the second index metadata 162 may be generated when the copper inventory collection model 132 is read by the system 100. Once the second index metadata 162 is generated, it may be stored in the indexed repository 106. More specifically, the second index metadata 162 may be stored in the second index 148. As described above, the index metadata may be configured to document circumstances of the overall data collection process for all of the datasources corresponding to the given inventory collection model. Additionally, or alternatively, the index metadata may be used to track and diagnose errors during the data collection process across all datasources corresponding to the given inventory collection model.

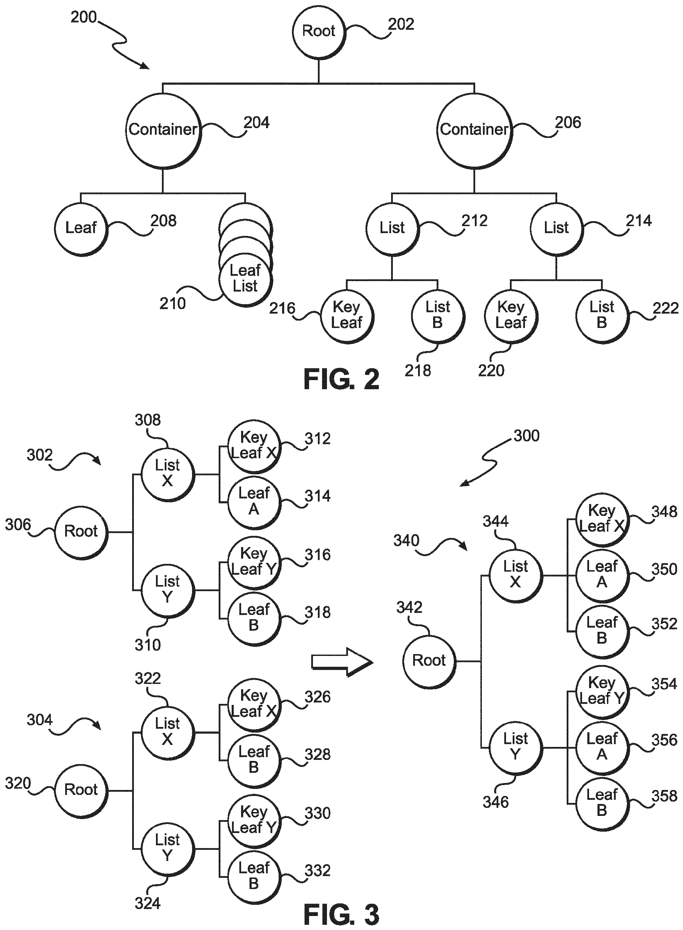

Referring to FIG. 2, an example embodiment of data 200 within a datasource of the system 100 is shown. The data 200 may be in the form of a data tree with a plurality of nodes. In some example embodiments, the datasource may be any of the fiber PMA 116, the copper PMA 118, the first fiber device 120, the second fiber device 122, the first copper device 124, or the second copper device 126 described above. As described above, the data stored within a datasource of the system 100 may be NETCONF data that may be encoded in XML which is hierarchical. The NETCONF data may include the configuration data and the operational data described above. Additionally, configuration data may be returned from a datasource in response to a GET-CONFIG request and operational data may be returned from a datasource in response to a GET request. Alternatively, configuration data may also be returned in response to a GET request.

The data 200 may include a root node 202 that may be at the top of the hierarchy. Under the root node 202, there may be one or more containers such as a first container 204 and a second container 206. From each container there may be at least one of a leaf, a leaf list, or a list. A leaf may be a final datapoint within the tree of the data 200. Similarly, a leaf list may be an array of final datapoints within the tree of the data 200. A list may have further branches extending from it such as key leaves or leaves. As shown in FIG. 2, the first container 204 may include a leaf 208 and a leaf list 210 and the second container 206 may include a first list 212, and a second list 214. The first list 212 may include a first key leaf 216 and a first list b 218 and the second list 214 may include a second key leaf 220 and a second list b 222. Each root node, container, leaf, list, leaf list, key leaf, and list b of the data 200 may be considered a node. In some example embodiments, there may be additional or fewer nodes within the data 200.

Because of the hierarchical structure of data within datasources of the system 100, the data may be merged through a common node. Depending on where a common node is in the data hierarchy, data from two or more datasources may be merged with either a complex, a simple, or a trivial merge.

Referring to FIG. 3, a complex merge 300 of a first dataset 302 and a second dataset 304 is shown. The first dataset 302 includes a root node 306 which branches into a first list 308 and a second list 310. The first list 308 may be a list X and the second list 310 may be a list Y. The first list 308 may additionally branch into a first key leaf 312 and a first leaf 314. The first key leaf 312 may be a key leaf X and the first leaf 314 may be a leaf A. The second list 310 may branch into a second key leaf 316 and a second leaf 318. The second key leaf 316 may be a key leaf Y and the second leaf 318 may be a leaf B. The second dataset 304 includes a root node 320 which branches into a first list 322 and a second list 324. The first list 322 may be the list X and the second list 324 may be the list Y. The first list 322 may additionally branch into a first key leaf 326 and a first leaf 328. The first key leaf 326 may be the key leaf X and the first leaf 328 may be the leaf B. The second list 324 may branch into a second key leaf 330 and a second leaf 332. The second key leaf 330 may be the key leaf Y and the second leaf 332 may be the leaf B.

In order to merge the first dataset 302 and the second dataset 304, one or more common nodes between the first dataset 302 and the second dataset 304 are identified. As shown in FIG. 3, list X and list Y are common nodes of the first dataset 302 and the second dataset 304. Thus, data below List X and List Y of the first dataset 302 and the second dataset 304 may be merged such that the first dataset 302 and the second dataset 304 are merged into a combined dataset 340.

The combined dataset 340 may include a root node 342 that may be the root node 306 of the first dataset 302 and the root node 320 of the second dataset 304. The combined dataset 340 may additionally include a first list 344 that may be the list X and a second list 346 that may be the list Y. The first list 344 may branch into a first key leaf 348, a first leaf 350, and a second leaf 352, and the second list 346 may branch into a second key leaf 354, a third leaf 356, and a fourth leaf 358. The first key leaf 348 may be the key leaf X, the first leaf 350 may be the leaf A, and the second leaf 352 may be the leaf B. The second key leaf 354 may be the key leaf Y, the third leaf 356 may be the leaf A, and the fourth leaf 358 may be the leaf B.

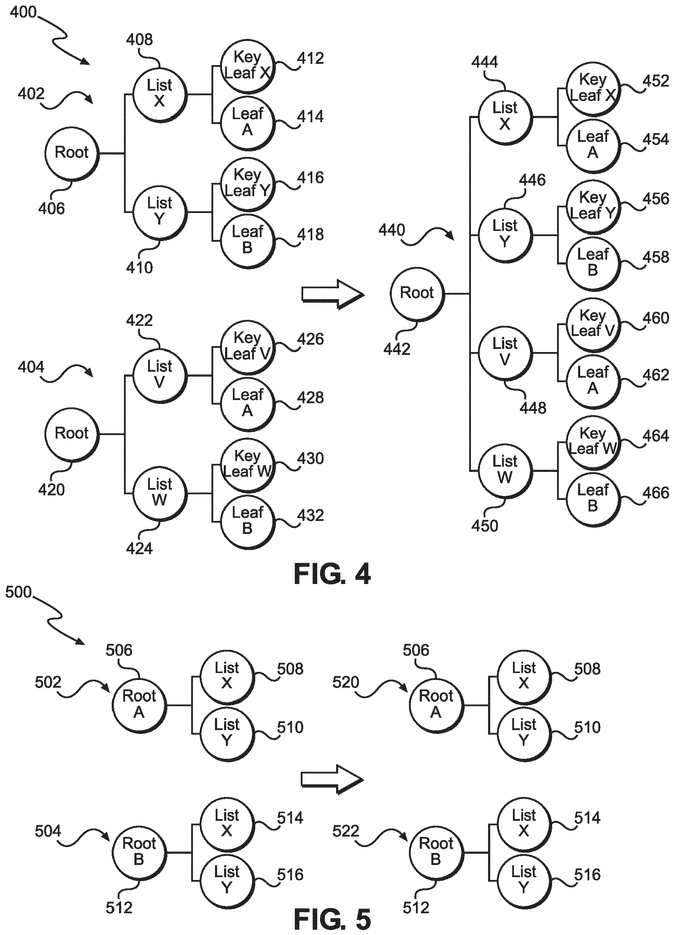

Referring to FIG. 4, a simple merge 400 of a first dataset 402 and a second dataset 404 is shown. The first dataset 402 includes a root node 406 which branches into a first list 408 and a second list 410. The first list 408 may be a list X and the second list 410 may be a list Y. The first list 408 may additionally branch into a first key leaf 412 and a first leaf 414. The first key leaf 412 may be a key leaf X and the first leaf 414 may be a leaf A. The second list 410 may branch into a second key leaf 416 and a second leaf 418. The second key leaf 416 may be a key leaf Y and the second leaf 418 may be a leaf B. The second dataset 404 includes a root node 420 which branches into a first list 422 and a second list 424. The first list 422 may be a list V and the second list 424 may be a list W. The first list 422 may additionally branch into a first key leaf 426 and a first leaf 428. The first key leaf 426 may be a key leaf V and the first leaf 428 may be the leaf A. The second list 424 may branch into a second key leaf 430 and a second leaf 432. The second key leaf 430 may be a key leaf W and the second leaf 432 may be the leaf B.

In order to merge the first dataset 402 and the second dataset 404 via a simple merge, one or more common nodes between the first dataset 402 and the second dataset 404 are identified. As shown in FIG. 4, there are no common list nodes so the next node to consider are the root nodes. Since the root node 406 is equivalent to the root node 420, the first dataset 402 and the second dataset 404 may be merged with a simple merge. In a simple merge, the data is combined at the root node to create a combined dataset 440.

The combined dataset 440 may include a root node 442 that may be equivalent to the root node 406 of the first dataset 402 and the root node 420 of the second dataset 404. The combined dataset 440 may further include a first list 444 that is the list X, a second list 446 that is the list Y, a third list 448 that is the list V, and a fourth list 450 that is the list W. The first list 444 may include a first key leaf 452 that may be the key leaf X and a first leaf 454 that may be the leaf A. The second list 446 may include a second key leaf 456 that may be the key leaf Y and a second leaf 458 that may be the key leaf B. The third list 448 may include a third key leaf 460 that may be the key leaf V and a third leaf 462 that may be the leaf A. The fourth list 450 may include a fourth key leaf 464 that may be the key leaf W and a fourth leaf 466 that may be the leaf B.

Referring to FIG. 5, a trivial merge 500 of a first dataset 502 and a second dataset 504 is shown. The first dataset 502 includes a root node 506 that may be a root node A which branches into a first list 508 and a second list 510. The first list 508 may be a list X and the second list 510 may be a list Y. The second dataset 504 includes a root node 512 that may be a root node B which branches into a first list 514 and a second list 516. The first list 514 may be the list X and the second list 516 may be the list Y.

In order to merge the first dataset 502 and the second dataset 504 via a trivial merge, no common nodes between the first dataset 502 and the second dataset 504 are identified. As shown in FIG. 5, there are no common root nodes between the first dataset 502 and the second dataset 504. Thus, there is not a common node to merge the first dataset 502 and the second dataset 504. When the first dataset 502 is merged with the second dataset 504, a combined dataset 520 is created that is equivalent to the first dataset 502 and the second dataset 504.

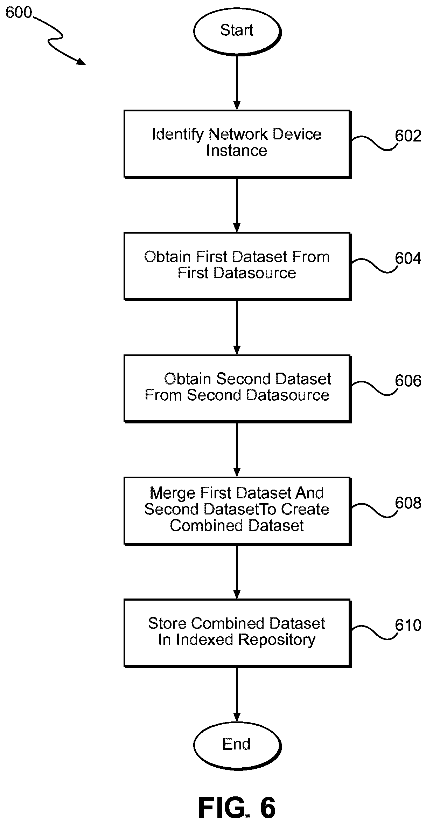

Referring to FIG. 6, a method 600 of operating a network is shown. In some example embodiments, the method 600, and any following method described herein, may be implemented with a system for operating a network that may include at least one memory and at least one processor. The at least one memory may include computer readable instructions and the at least one processor may be configured to execute the computer readable instructions to cause the system to perform the method 600.

Referring to FIG. 6, at step 602 the at least one processor may identify a network device instance. In some example embodiments, identifying a network device instance may include identifying a network device and an associated PMA for a device type. For example, with reference to FIG. 1, the fiber PMA 116 and the first fiber device 120 may be datasources of a network device instance.

After identifying a network device instance at step 602, the method may proceed to step 604 where the at least one processor may obtain a first dataset from a first datasource of the identified network device instance.

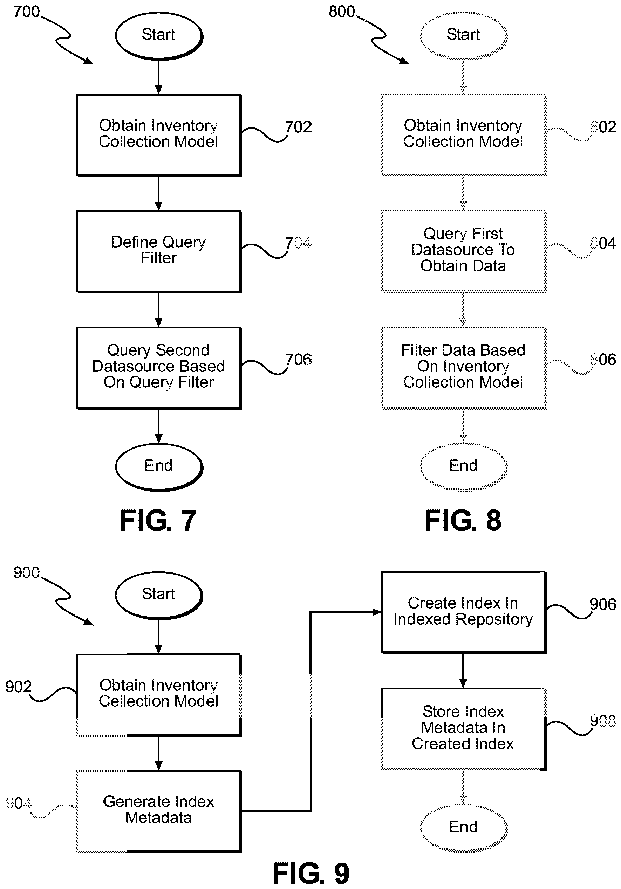

The method 600 may additionally include step 606 where the at least one processor may obtain a second dataset from a second datasource of the identified network device instance. In some example embodiments, step 604 and step 606 may occur concurrently. Step 604 and step 606 are further described below with respect to FIGs. 7 and 8.

In some example embodiments, at least one additional dataset may be obtained from at least one additional datasource within the network. For example, a third dataset may be obtained from a third datasource containing data for the network device instance.

Once the first dataset and the second dataset are obtained, the method 600 may proceed to step 608 where the at least one processor merges the first dataset and the second dataset to create a combined dataset. In example embodiments where additional datasets are obtained, these additional datasets may also be merged with the first dataset and the second dataset to create the combined dataset. In some example embodiments, the first dataset and the second dataset may be merged via a complex merge, a simple merge, or a trivial merge as described above with reference to FIGs. 3-5. If there is a discrepancy between data from the first dataset and data from the second dataset, data from the second dataset may be prioritized. The second dataset may be prioritized so that any given datum may be unambiguously traceable back to its point of origin. If a datum is located in more than one datasource, the datum was collected from the datasource of higher priority, and thus, the point of origin may be identified. In some example embodiments, the first dataset or another dataset, if there are more than two datasets, may be prioritized rather than the second dataset.

After creating the combined dataset, the method 600 may proceed to step 610 where the at least one processor stores the combined dataset in an indexed repository. Once the combined dataset is stored in the indexed repository, the method 600 may end. In some example embodiments, if there is more than one network device instance, the method 600 may be carried out concurrently across multiple network device instances.

Referring to FIG. 7, a method 700 of obtaining the second dataset from the second datasource at step 606 of FIG.6, according to an example embodiment, is shown. At step 702 the at least one processor obtains an inventory collection model. In some example embodiments, an inventory collection model may be defined and/or pre-defined and may be stored in memory of the system. Obtaining an inventory collection model may include accessing a defined and/or pre-defined inventory collection model of the system. As described above, the inventory collection model may specify a device type and one or more inventory object specifications. In some example embodiments, the one or more inventory object specifications may include unique paths that may describe a location of an inventory object within a datasource based on a YANG model of the datasource. In some example embodiments, an inventory object may be a node of a hierarchical data tree as described above with reference to FIG. 2. The unique paths may additionally be used to define effective XPaths to merge data from the second datasource with the first datasource based on a YANG model and a data type of the first datasource and the second datasource.

Once the inventory collection model is generated, the method 700 may proceed to step 704 where the at least one processor defines a query filter. The query filter may be defined based on a unique path and a YANG model of the device type associated with the inventory collection model. The at least one processor may define the query filter which may identify a node of the first datasource.. The identified node may describe the data to be collected from the second datasource.

After the query filter is defined at step 704, the at least one processor queries the second datasource based on the query filter at step 706. When the second datasource is queried based on the query filter, only data specified by the unique path identifying the node may be extracted from the second datasource. The queried data from the second datasource may be a filtered dataset. In some example embodiments, the filtered dataset may be an XML-encoded draft of the second dataset.

In some example embodiments, the second datasource may be a network device such as the first fiber device 120 described above. The second dataset may be operational data collected from the network device.

Referring to FIG. 8, a method 800 of obtaining the first dataset from the first datasource at step 604 of FIG.6, according to an example embodiment, is shown. At step 802, the at least one processor obtains an inventory collection model. Step 802 may be similar or analogous to step 702 described above with reference to FIG. 7.

Once the inventory collection model is obtained, the method 800 may proceed to step 804 where the at least one processor queries the first datasource to obtain the data.

Once the data is obtained at step 804, the method 800 may proceed to step 806 where the at least one processor filters the data based on a unique path of the inventory collection model and a YANG model of the device type associated with the inventory collection model. The data may be filtered based on the unique path to create a filtered dataset that may be an XML-encoded draft of the first dataset.

In some example embodiments, the first datasource may be a PMA such as the first PMA 116 described above. The first dataset may be configuration data of a network device that may be hosted by the PMA.

Referring to FIGs. 7 and 8, in some example embodiments, data may be obtained for each inventory collection model of a plurality of inventory collection models. Additionally, there may be one or more unique paths identified by each inventory collection model. Thus, data may be collected from the first datasource, the second datasource, and any additional datasources for each of the unique paths of the inventory object specification for each inventory collection model.

FIG. 7 describes an example process of querying a datasource with a specific, filtered query. As described above, data from the second datasource may be queried based on an identified node of an inventory collection model. In contrast, FIG. 8 describes an example process of filtering data after having been acquired from a datasource. The process of FIG. 8 may be known as a "data dump." In a data dump, a large amount of data is extracted from a datasource, and the data is filtered after it is extracted based on an inventory collection model. In some example embodiments, certain datasources may have favourable throughput and latency that enable a relatively large amount of data to be acquired via a data dump. For example, a PMA datasource may be configured to have data accessed by the method of FIG. 8. In contrast, devices such as network devices may not have favourable throughput and latency. This may require the amount of queried data to be less than that of a datasource with favourable throughput and latency so it may be necessary to only query data within a unique path of an inventory object specification of an inventory collection model as described in FIG. 7.

In some example embodiments, one or more datasources may be queried concurrently which may negate latency of the network device instance. For example, one or more datasources may be queried in parallel to improve and/or optimize overall network inventory collection time.

Referring to FIG. 9, a method 900 of generating and storing index metadata, according to an example embodiment is shown. The method 900 provides additional steps, in addition to step 902, that may occur in any of the above-described methods when an inventory collection model is obtained.

At step 902, the at least one processor obtains an inventory collection model. Step 902 may be similar or analogous to step 702 described above with reference to FIG. 7.

The method 900 may proceed to step 904 where the at least one processor generates index metadata after the inventory collection model is obtained. In some example embodiments, the index metadata may be generated after a system, such as the system 100, reads an inventory collection model. As described above, the index metadata may be configured to document circumstances of the overall data collection process for all of the datasources corresponding to the given inventory collection model and data type. Additionally, or alternatively, the index metadata may be used to track and diagnose errors during the data collection process across all datasources corresponding to the given inventory collection model. For example, index metadata may be used to provide timely and relevant information to a user or consumer of inventory data. In some example embodiments, index metadata may be collected on a device basis and on an overall collection basis. For example, the device basis may describe if a device is not reachable such that only configuration data is collected from a PMA and/or the last collected operational data is provided. The overall collection basis may describe when partial collection occurs due to timeout or to a device error/inability in providing the requested data.

At step 906, the at least one processor creates an index in an indexed repository. In some example embodiments, creating the index in the indexed repository may occur concurrently with the step 904 or prior to the step 904 but after the inventory collection model is read by the system. The indexed repository may be configured to store data from one or more datasources. More specifically, the indexed repository may be configured to store one document per network device instance of a given data type. Thus, the created index may correspond to an inventory collection model associated with a particular data type. The one document per network device instance may include the filtered and merged data from one or more datasources of the network device instance. The indexed repository may be configured to store a plurality of documents corresponding to a plurality of network device instances.

After the index is created in the indexed repository at step 906, the method 900 may proceed to step 908 where the at least one processor stores the index metadata in the created index. The index metadata may be stored in the created index in the indexed repository corresponding to the obtained inventory collection model. In some example embodiments, one or more inventory collection models may be obtained and there may be index metadata generated for each inventory collection model. The index metadata may be stored in a unique index for each inventory collection model.

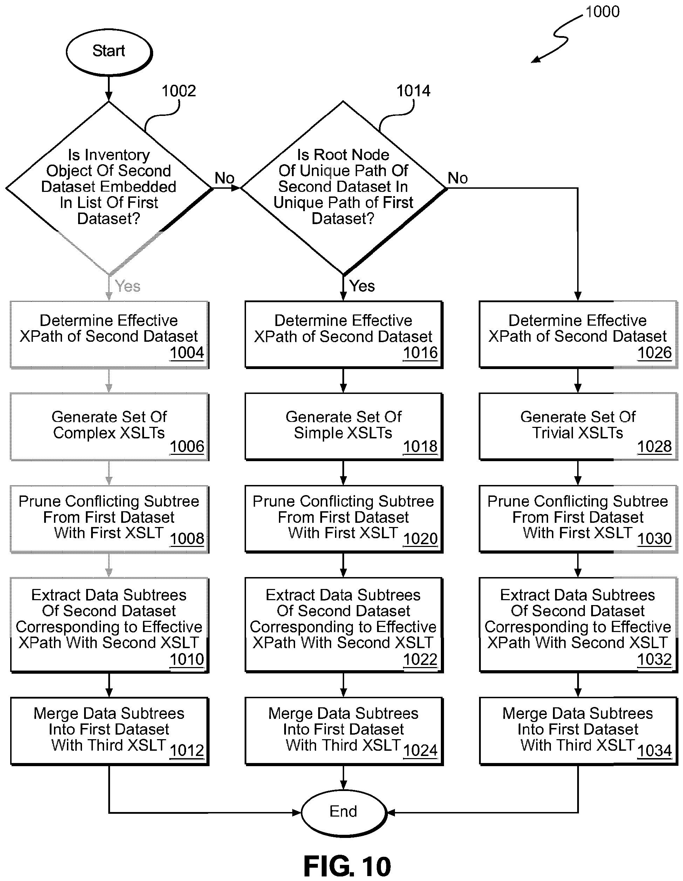

Referring to FIG. 10, a method 1000 of merging a first dataset and a second dataset to create a combined dataset, according to an example embodiment, is described. In some example embodiments, the method 1000 may correspond to the step 608 of the method 600. The method 1000 may be performed for each unique path of an inventory object specification of the inventory collection model.

At conditional step 1002, the at least one processor determines whether a unique path of an inventory object of the inventory collection model of the second dataset is embedded within a list in a unique path of an inventory object of the inventory collection model of the first dataset. To determine if an inventory object of the inventory collection model of the second dataset is embedded within a list of the first dataset, unique paths of the first dataset and the second dataset are compared to determine whether the unique path of the second dataset is located within a unique path of the first dataset. It may additionally be possible for the at least one processor to traverse the first dataset and the second dataset to determine the hierarchical structure of both datasets and determine any common nodes of the datasets. If the inventory object of the second dataset is embedded within a list of the first dataset, there may be a common node, below a root node, between the first dataset and the second dataset. Because the inventory object is embedded within a list of the first dataset, the first dataset and the second dataset may require a complex merge to merge the data.

If the inventory object of the second dataset is embedded within a list of the first dataset, the method 1000 may proceed to step 1004 where the at least one processor determines at least one effective XPath of the second dataset. The at least one effective XPath may be the shortest XPath through the second dataset so that it may be merged with the first dataset. More specifically, the effective XPath may start with the common list node identified when it is determined that the inventory object of the second dataset is embedded within a list of the first dataset and the effective XPath may continue down the hierarchical data tree until a node in the second dataset is reached that is not present in any path of the first dataset or until the end of the path of the second dataset it reached.

Once at least one effective XPath is determined, the method 1000 may proceed to step 1006 where the at least one processor generates at least one set of complex XSLTs. The at least one set of complex XSLTs may correspond to the at least one effective XPath of the second dataset. The at least one set of complex XSLTs may be used to transform, filter, and/or merge at least the first dataset and/or the second dataset.

After the at least one set of complex XSLTs are generated, the method 1000 may proceed to step 1008 where the at least one processor prunes conflicting subtrees from the first dataset using a first XSLT. The first XSLT may be an XSLT of the at least one set of complex XSLTs.

Once the conflicting subtrees are pruned from the first dataset, the method 1000 may proceed to step 1010 where the at least one processor extracts data subtrees of the second dataset that correspond to the at least one effective XPath of the second dataset. In some example embodiments, the data subtrees of the second dataset may be extracted with a second XSLT. The second XSLT may be an XSLT of the at least one set of complex XSLTs. In some example embodiments, step 1008 and step 1010 may be reversed such that extracting the data subtrees occurs prior to pruning conflicting subtrees from the first dataset.

Once the data subtrees of the second dataset are extracted, the method 1000 may proceed to step 1012 where the at least one processor merges the data subtrees of the second dataset into the first dataset. The data subtrees of the second dataset may be merged into the first dataset by a third XSLT that may be an XSLT of the at least one set of complex XSLTs.

In some example embodiments, steps 1006 through 1012 may be repeated for each effective XPath of the at least one determined effective XPath. After the data from the first dataset and the second dataset is merged at step 1012, the method 1000 may end.

Referring back to the conditional step 1002, if the inventory object of the second dataset is not embedded within a list of the first dataset, the method 1000 may proceed to conditional step 1014 where the at least one processor determines if a root node of a unique path of the second dataset is within a unique path of the first dataset. If there is a common root node between the first dataset and the second dataset, the first dataset and the second dataset may be merged with a simple merge.

If there is a common root node between the first dataset and the second dataset, the method 1000 may proceed to step 1016 where the at least one processor determines at least one effective XPath of the second dataset. The at least one effective XPath may be the shortest XPath through the second dataset so that it may be merged with the first dataset. More specifically, the effective XPath may start with the common root node identified when it is determined that there is a common root node between the first dataset and the second dataset and the effective XPath may continue down the hierarchical data tree until a node in the second dataset is reached that is not present in any path of the first dataset or until the end of the path of the second dataset is reached.

Once at least one effective XPath is determined, the method 1000 may proceed to step 1018 where the at least one processor generates at least one set of simple XSLTs. The at least one set of simple XSLTs may correspond to the at least one effective XPath of the second dataset. The at least one set of simple XSLTs may be used to transform, filter, and/or merge at least the first dataset and/or the second dataset.

After the at least one set of simple XSLTs are generated, the method 1000 may proceed to step 1020 where the at least one processor prunes conflicting subtrees from the first dataset using a first XSLT. The first XSLT may be an XSLT of the at least one set of simple XSLTs.

Once the conflicting subtrees are pruned from the first dataset, the method 1000 may proceed to step 1022 where the at least one processor extracts data subtrees of the second dataset that correspond to the at least one effective XPath of the second dataset. In some example embodiments, the data subtrees of the second dataset may be extracted with a second XSLT. The second XSLT may be an XSLT of the at least one set of simple XSLTs. In some example embodiments, step 1020 and step 1022 may be reversed such that extracting the data subtrees occurs prior to pruning conflicting subtrees from the first dataset.

Once the data subtrees of the second dataset are extracted, the method 1000 may proceed to step 1024 where the at least one processor merges the data subtrees of the second dataset into the first dataset. The data subtrees of the second dataset may be merged into the first dataset by a third XSLT that may be an XSLT of the at least one set of simple XSLTs.

In some example embodiments, steps 1018 through 1024 may be repeated for each effective XPath of the at least one determined effective XPath. After the data from the first dataset and the second dataset is merged at step 1024, the method 1000 may end.

Referring back to the conditional step 1014, if there is not a common root node between the first dataset and the second dataset, the method 1000 may proceed to step 1026 where the at least one processor determines at least one effective XPath of the second dataset. The at least one effective XPath may be the shortest XPath through the second dataset so that it may be merged with the first dataset. Because there is not a common root node, this may be a trivial merge situation and the root node of the second dataset may be the effective XPath of the second dataset. The trivial merge may be substantially similar to the simple merge with the root node of the second dataset being the effective XPath of the second dataset.

Once at least one effective XPath is determined, the method 1000 may proceed to step 1028 where the at least one processor generates at least one set of trivial XSLTs. The at least one set of trivial XSLTs may correspond to the at least one effective XPath of the second dataset. The at least one set of trivial XSLTs may be used to transform, filter, and/or merge at least the first dataset and/or the second dataset.

After the at least one set of simple XSLTs are generated, the method 1000 may proceed to step 1030 where the at least one processor prunes conflicting subtrees from the first dataset using a first XSLT. The first XSLT may be an XSLT of the at least one set of trivial XSLTs.

Once the conflicting subtrees are pruned from the first dataset, the method 1000 may proceed to step 1032 where the at least one processor extracts data subtrees of the second dataset that correspond to the at least one effective XPath of the second dataset. In some example embodiments, the data subtrees of the second dataset may be extracted with a second XSLT. The second XSLT may be an XSLT of the at least one set of trivial XSLTs. In some example embodiments, step 1030 and step 1032 may be reversed such that extracting the data subtrees occurs prior to pruning conflicting subtrees from the first dataset.

Once the data subtrees of the second dataset are extracted, the method 1000 may proceed to step 1034 where the at least one processor merges the data subtrees of the second dataset into the first dataset. The data subtrees of the second dataset may be merged into the first dataset by a third XSLT that may be an XSLT of the at least one set of trivial XSLTs.

In some example embodiments, the steps 1028 through 1034 may be repeated for each effective XPath of the at least one determined effective XPath. After the data from the first dataset and the second dataset is merged at the step 1034, the method 1000 may end.

The merged data of the method 1000 may be considered a combined dataset and may be XML-encoded data. The combined dataset may be an XML-encoded draft of inventory data to be stored in the indexed repository.

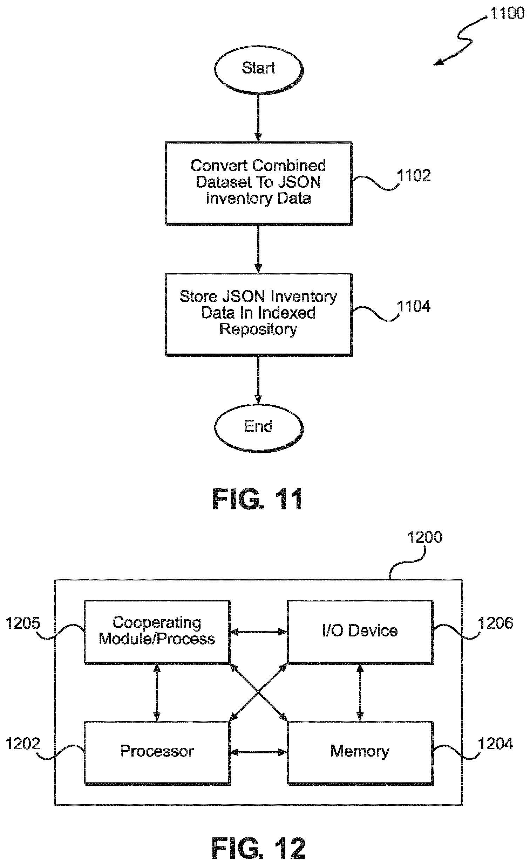

Referring to FIG. 11, a method 1100 of storing merged or combined data is shown. In some example embodiments, the method 1100 may occur after the first dataset and the second dataset are merged via the method 1000. At step 1102, the at least one processor converts a combined dataset to JSON inventory data. As described above, the combined dataset may be XML-encoded and may need to be transformed in order to be stored in the indexed repository. The XML-encoded combined dataset may be converted to JSON inventory data by RESTCONF corresponding to the YANG model of the device type. RESTCONF may be a REST-based protocol where data is modeled using YANG models as described above with reference to NETCONF. In some example embodiments, a server that can support a NETCONF protocol may also be configured to support a RESTCONF protocol.

After the combined dataset is converted to JSON inventory data, the at least one processor may store the combined dataset in the indexed repository at step 1104. The combined dataset may be stored as a document corresponding to the network device instance of the combined dataset. As described above, the indexed repository may be configured to store one document per network device instance. The indexed repository may be configured to store a plurality of documents corresponding to a plurality of network device instances that each include JSON inventory data. As described above, the indexed repository may additionally include index metadata corresponding to the inventory collection model used to obtain the first dataset and the second dataset. This index metadata may be used to track and diagnose errors during the collection of data from the datasources corresponding to the network device instance. In some example embodiments, the combined data of the indexed repository may be output from the indexed repository via at least one of an application, Operation Support Systems (OSS), Business Support Systems (BSS), order management systems, network monitoring, or troubleshooting.

After the combined dataset is stored in the indexed repository, the method 1100 may end.

In some example embodiments, data may be collected, merged, and stored using a static approach. The methods and embodiments described above describe this static approach where configuration data is collected from a first datasource and operational data is collected from a second datasource. Using this approach, data of a first type may be collected from a first datasource and data of a second type may be collected from a second datasource. There may be a backup source defined for certain data. For example, the second datasource may store operational and configuration data and may be a backup source of configuration data if the configuration data cannot be collected from the first datasource. In some example embodiments, data may be unable to be collected from the first choice datasource due to needs of a user and/or latency or scale involved. The change in choice of datasource to collect data from may be done proactively or reactively. When done proactively, the change is made upon detection of a connection failure of a device. When done reactively, the data collection is attempted from the first choice datasource and is queried from the backup datasource if the collection is unsuccessful from the first choice datasource.

In some example embodiments, data may be collected, merged, and stored using a dynamic approach rather than the static approach described above. When using a dynamic approach, additional factors are considered within a network topology to optimize data collection from the datasources corresponding to the network of devices. In some example embodiments, a dynamic approach may be obtained based on a static approach but may be adjusted based on on-demand requests or at specific intervals to optimize the data collection, merging, filtering, and storing processes. In some example embodiments, a dynamic approach may consider at least one of historical performance of the datasources corresponding to the network of devices and current conditions of the network.

In either the static or the dynamic approach, the system may determine which datasource within a network device instance to collect data from based on at least a link cost and a processing/forwarding cost associated with collecting the data. In some example embodiments, the link cost may be a number of hops for the inventory collection/ aggregation, a number of IP hops, or an actual physical distance in order to obtain the required data. The processing/forwarding cost may be provisioned values or may be provided by each datasource during a process of network discovery. In some example embodiments, a datasource to collect an inventory object from may be determined based on the link cost and the processing/forwarding cost including whether network connectivity allows the collection to be done and whether the scale of the operation allows it to be done within a specified duration considering bandwidth constraints and concurrency limits. In some example embodiments, Dijkstra's algorithm or Bellman-Ford's algorithm may be applied to determine a datasource to collect an inventory object from with necessary enhancements and/or modifications. Based on the above-described constraints, a datasource may be selected as a primary candidate for inventory collection as well as a backup datasource.

In general, the mechanisms of inventory collection described herein may be self-adaptive such with respect to determination of a network topology based on current network conditions and the locations of datasources within the network topology, the sequence of data retrieval from datasources of the network topology, and determination of a level of concurrency based on an inventory collection model, network topology, resource requirements, and available resources. The methods described herein may reduce and/or minimize resource requirements while fulfilling latency requirements by optimizing the sequence and order of steps to achieve inventory collection for each datasource of a network device instance and by determining whether data from the datasources of the network device instance should be queried as a data dump or queried on a filtered basis. In some example embodiments, transformations and/or merges of the data may also be optimized by performing transformations and/or merges per inventory object of a datasource, in bulk for all inventory objects of a datasource, or in a single transformation and/or merge for all inventory objects for multiple datasources of the network device instance. If a single transformation and/or merge is used for all inventory objects for multiple datasources of the network device instance sequencing and concurrency may also be adapted to reduce and/or minimize resource requirements and fulfil latency requirements. Similarly, a single transformation and/or merge may be used for all inventory objects for multiple datasources of multiple network device instances merged into one aggregated device inventory dataset.

In some example embodiments, a user may want to access data (or inventory data) and may be more concerned about latency of the system than completeness and/or accuracy of the data. In this example scenario, network inventory data collection may be constrained to require maximum latency per datasource collection request and/or maximum overall network data collection time limit. These requirements will impose additional constrains on optimization programs used to determine a network topology for data collection. For example, concurrency may be determined dynamically based on a user defined and/or pre-defined constraints such as the number of concurrent requests and the criteria of processing of all inventory objects in bulk across multiple datasources of a network device instance. In some example embodiments, inventory objects may also have priority associated with them. This may enable collection and processing of inventory objects with higher priority to be attempted first in the case of resource scarcity such as computer, memory, or bandwidth scarcity.

Although described herein with regard to execution by at least one processor, the methods, operations, functions, etc., described herein may also characterized as being implemented via computer-executable instructions stored on a non-transitory computer readable medium, wherein the computer-readable instructions, when executed by one or more processors of a system, may cause the system to perform the methods, operations, functions, etc. describe herein. In one example, a system may include at least one memory storing computer readable instructions and at least one processor configured to execute the computer readable instructions to cause the system to: identify a network device instance including at least two datasources; obtain a first dataset from a first datasource of the network device instance; obtain a second dataset from a second datasource of the network device instance; merge the first dataset and the second dataset to create a combined dataset; and store the combined dataset in an indexed repository. In some example embodiments, the first dataset may include network configuration data associated with a network device and hosted by a Persistent Management Agent (PMA) and the second dataset may include operational data of the network device.

FIG. 12 depicts a high-level block diagram of a computer, computing, or electronic device suitable for use in implementing, *inter alia,* network management virtualizer, nodes, network management entities, as well as other network elements and/or devices.

Referring to FIG. 12, the computer 1200 includes one or more processors 1202 (e.g., a central processing unit (CPU) or other suitable processor(s)) and a memory 1204 (e.g., random access memory (RAM), read only memory (ROM), and the like). The computer 1200 also may include a cooperating module/process 1205. The cooperating process 1205 may be loaded into the memory 1204 and executed by the one or more processors 1202 to implement functions as discussed herein and, thus, the cooperating process 1205 (including associated data structures) may be stored on a computer readable storage medium (e.g., RAM memory, magnetic or optical drive or diskette, or the like).

The computer 1200 also may include one or more input/output devices 1206 (e.g., a user input device (such as a keyboard, a keypad, a mouse, and the like), a user output device (such as a display, a speaker, and the like), an input port, an output port, a receiver, a transmitter, one or more storage devices (e.g., a tape drive, a floppy drive, a hard disk drive, a compact disk drive, and the like), or the like, as well as various combinations thereof).

Although the terms first, second, etc. may be used herein to describe various elements, these elements should not be limited by these terms. These terms are only used to distinguish one element from another. For example, a first element could be termed a second element, and similarly, a second element could be termed a first element, without departing from the scope of this disclosure. As used herein, the term "and/or," includes any and all combinations of one or more of the associated listed items.

When an element is referred to as being "connected," or "coupled," to another element, it may be directly connected or coupled to the other element or intervening elements may be present. By contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/ acts involved.

Specific details are provided in the following description to provide a thorough understanding of example embodiments. However, it will be understood by one of ordinary skill in the art that example embodiments may be practiced without these specific details. For example, systems may be shown in block diagrams so as not to obscure the example embodiments in unnecessary detail. In other instances, well-known processes, structures, and techniques may be shown without unnecessary detail in order to avoid obscuring example embodiments.

As discussed herein, illustrative embodiments will be described with reference to acts and symbolic representations of operations (e.g., in the form of flow charts, flow diagrams, data flow diagrams, structure diagrams, block diagrams, etc.) that may be implemented as program modules or functional processes include routines, programs, objects, components, data structures, etc., that perform particular tasks or implement particular abstract data types and may be implemented using existing hardware at, for example, existing CPE devices, Distribution Point Units (DPUs), network management virtualizers, network management entities, clients, gateways, nodes, agents, controllers, computers, cloud based servers, web servers, proxies or proxy servers, application servers, load balancers or load balancing servers, heartbeat monitors, device management servers, or the like. As discussed later, such existing hardware may include, inter alia, one or more Central Processing Units (CPUs), system-on-chip (SOC) devices, digital signal processors (DSPs), application-specific-integrated-circuits, field programmable gate arrays (FPGAs) computers or the like.

Although a flow chart may describe the operations as a sequential process, many of the operations may be performed in parallel, concurrently, or simultaneously. In addition, the order of the operations may be re-arranged. A process may be terminated when its operations are completed, but may also have additional steps not included in the figure. A process may correspond to a method, function, procedure, subroutine, subprogram, etc. When a process corresponds to a function, its termination may correspond to a return of the function to the calling function or the main function.

As disclosed herein, the term "storage medium", "computer readable storage medium" or "non-transitory computer readable storage medium" may represent one or more devices for storing data, including read only memory (ROM), random access memory (RAM), magnetic RAM, core memory, magnetic disk storage mediums, optical storage mediums, flash memory devices and/or other tangible machine readable mediums for storing information. The term "computer-readable medium" may include, but is not limited to, portable or fixed storage devices, optical storage devices, and various other mediums capable of storing, containing, or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and/or receiving information, data, arguments, parameters, or memory contents. Information, arguments, parameters, data, etc. may be passed, forwarded, or transmitted via any suitable means including memory sharing, message passing, token passing, network transmission, etc.

The terms "including" and/or "having", as used herein, are defined as comprising (i.e., open language). The term "coupled", as used herein, is defined as connected, although not necessarily directly, and not necessarily mechanically. Terminology derived from the word "indicating" (e.g., "indicates" and "indication") is intended to encompass all the various techniques available for communicating or referencing the object/information being indicated. Some, but not all, examples of techniques available for communicating or referencing the object/information being indicated include the conveyance of the object/information being indicated, the conveyance of an identifier of the object/information being indicated, the conveyance of information used to generate the object/information being indicated, the conveyance of some part or portion of the object/information being indicated, the conveyance of some derivation of the object/information being indicated, and the conveyance of some symbol representing the object/information being indicated.

According to example embodiments, CPE devices, endpoints, DPUs, network management virtualizers, network management entities, clients, gateways, nodes, agents controllers, computers, cloud based servers, web servers, application servers, proxies or proxy servers, load balancers or load balancing servers, heartbeat monitors, device management servers, or the like, may be (or include) hardware, firmware, hardware executing software or any combination thereof. Such hardware may include one or more Central Processing Units (CPUs), system-on-chip (SOC) devices, digital signal processors (DSPs), application-specific-integrated-circuits (ASICs), field programmable gate arrays (FPGAs) computers or the like configured as special purpose machines to perform the functions described herein as well as any other well-known functions of these elements. In at least some cases, CPUs, SOCs, DSPs, ASICs and FPGAs may generally be referred to as processing circuits, processors and/or microprocessors.

The CPE devices, endpoints, DPUs, network management virtualizers, network management entities, clients, gateways, nodes, agents, controllers, computers, cloud based servers, web servers, application servers, proxies or proxy servers, load balancers or load balancing servers, heartbeat monitors, device management servers, or the like, may also include various interfaces including one or more transmitters/receivers connected to one or more antennas, a computer readable medium, and (optionally) a display device. The one or more interfaces may be configured to transmit/receive (wireline and/or wirelessly) data or control signals via respective data and control planes or interfaces to /from one or more network elements, such as switches, gateways, termination nodes, controllers, servers, clients, and the like.

Benefits, other advantages, and solutions to problems have been described above with regard to specific embodiments of the invention. However, the benefits, advantages, solutions to problems, and any element(s) that may cause or result in such benefits, advantages, or solutions, or cause such benefits, advantages, or solutions to become more pronounced are not to be construed as a critical, required, or essential feature or element of any or all the claims.

Reference is made in detail to embodiments, examples of which are illustrated in the accompanying drawings, wherein like reference numerals refer to the like elements throughout. In this regard, the example embodiments may have different forms and should not be construed as being limited to the descriptions set forth herein. Accordingly, the example embodiments are merely described below, by referring to the figures, to explain example embodiments of the present description. Aspects of various embodiments are specified in the claims.

## Claims

1. A system for operating a network, the system comprising means to:
identify a network device instance including at least two datasources,
obtain a first dataset from a first datasource of the network device instance, the first dataset including network configuration data associated with a network device and hosted by a Persistent Management Agent (PMA),
obtain a second dataset from a second datasource of the network device instance, the second dataset including operational data of the network device,
merge the first dataset and the second dataset to create a combined dataset, and
store the combined dataset in an indexed repository.

2. The system of claim 1, wherein the first datasource is the Persistent Management Agent (PMA) and the second datasource is the network device and the network device includes the operational data for the network device and configuration data for the network device.

3. The system of claim 1, wherein
the combined dataset is stored as a document in the indexed repository,
the document corresponds to the network device instance, and
the indexed repository is configured to store a plurality of documents corresponding to a plurality of network device instances.

4. The system of claim 1, wherein the means cause the system to:
obtain a third dataset from a third datasource of the network device instance,
merge the third dataset into the combined dataset to create an updated dataset, and
store the updated dataset in the indexed repository.

5. The system of claim 1, wherein the means cause the system to obtain an inventory collection model including at least one inventory object specification and a reference to at least one associated device type with a common Yang model, the at least one inventory object specification defining a unique path.

6. The system of claim 5, wherein the means cause the system to:
generate index metadata from the inventory collection model and the common Yang model of the at least one associated device type;
create an index in the indexed repository corresponding to the inventory collection model; and
store the index metadata in the index in the indexed repository corresponding to the inventory collection model.

7. The system of claim 5, wherein the means cause the system to obtain the second dataset from the second datasource by
defining a query filter based on the unique path and the common Yang model of the at least one device type associated with the inventory collection model; and
querying the second datasource with the query filter to obtain a filtered dataset from the second datasource to create an XML-encoded draft of the second dataset.

8. The system of claim 5, wherein the means cause the system to obtain the first dataset from the first datasource by
querying the first datasource to obtain data from the first datasource; and
filtering the data based on the unique path of the inventory collection model and the common Yang model of the at least one device type associated with the inventory collection model to create an XML-encoded draft of the second dataset.

9. The system of claim 5, wherein
a unique path of an inventory object specification of the inventory collection model corresponding to the second dataset is embedded within a list in a unique path of an inventory object of the inventory collection model corresponding to the first dataset, and
the means cause the system to merge the first dataset and the second dataset to create the combined dataset via a complex merge.

10. The system of claim 9, wherein the complex merge comprises:
determining at least one effective XPath of the second dataset;
generating at least one set of complex Extensible Stylesheet Language Transformations (XSLTs) for the at least one effective XPath of the second dataset;
pruning conflicting subtree from the first dataset using a first XSLT;
extracting data subtrees of the second dataset corresponding to the at least one effective XPath of the second dataset with a second XSLT; and
merging the data subtrees into the first dataset with a third XSLT.

11. The system of claim 5, wherein
a root node of a unique path of an inventory object specification of the inventory collection model corresponding to the second dataset is specified in a unique path of an inventory object specification of the inventory collection model corresponding to the first dataset; and
the means cause the system to merge the first dataset and the second dataset to create the combined dataset via a simple merge.

12. The system of claim 11, wherein the simple merge comprises:
determining at least one effective XPath of the second dataset;
generating a set of simple XSLTs for the at least one effective XPath of the second dataset;
pruning conflicting subtree from the first dataset using a first XSLT;
extracting data subtrees of the second dataset corresponding to the at least one effective XPath of the second dataset using a second XSLT; and
merging the data subtrees into the first dataset using a third XSLT.

13. The system of claim 5, wherein the means cause the system to:
use a static approach to identify datasources corresponding to each inventory object specification of the inventory collection model; and
adjust obtaining of the first dataset from the first datasource of the network device instance and obtaining of the second dataset from the second datasource of the network device instance.

14. The system of claim 5, wherein the means cause the system to:
use a dynamic approach to identify datasources corresponding to each inventory object specification of the inventory collection model; and
adjust obtaining of the first dataset from the first datasource of the network device instance and obtaining of the second dataset from the second datasource of the network device instance based on at least one of historical performance of the first datasource, historical performance of the second datasource, and current conditions of the network.

15. A method for operating a network, the method comprising:
identifying a network device instance including at least two datasources;
obtaining a first dataset from a first datasource of the network device instance, the first dataset including network configuration data associated with a network device and hosted by a Persistent Management Agent, PMA;
obtaining a second dataset from a second datasource of the network device instance, the second dataset including operational data of the network device;
merging the first dataset and the second dataset to create a combined dataset; and
storing the combined dataset in an indexed repository.
